# EUROPÄISCHE PATENTANMELDUNG

(11) **EP 1 503 562 A2**
(43) Veröffentlichungstag der Anmeldung: **02.02.2005**
(21) Anmeldenummer: 04017438.5
(22) Anmeldetag: 23.07.2004
(51) Int. Cl.: H04L 29/06, H04L 12/58

(54) **Verfahren zur Ver- und Entschlüsselung oder Signatur von E-Mails über einen E-Mail-Server**

(30) Priorität: 30.07.2003 DE 10334550
(71) Anmelder: Deutsche Telekom AG, 53113 Bonn (DE)
(72) Erfinder: Saar, Eva, 64347 Griesheim (DE); Schaaf, Joachim, Dr, 64293 Darmstadt (DE)

(57) **Zusammenfassung**

Die Erfindung betrifft in Verfahren zur Ver- und/oder Entschlüsselung und/oder Signatur von elektronischen Nachrichten, mit einem Nachrichten-Client zum Senden und/oder Empfangen der elektronischen Nachrichten und einem Nachrichten-Server, der die elektronischen Nachrichten dem Nachrichten-Client bereitstellt und/oder an den Empfänger weiterleitet, wobei der Nachrichten-Client beim verschlüsselten Senden der elektronischen Nachricht vom Nachrichten-Server einen öffentlichen Schlüssel des Empfängers anfordert. Der Nachrichten-Server überprüft, ob der Empfänger einen Schlüssel besitzt, um diesen dem Nachrichten-Client bereitzustellen, und falls ein solcher nicht existiert, erzeugt er diesen. Der öffentliche Schlüssel wird dem Nachrichten-Client des Sender übermittelt und der geheime Schlüssel dem Empfänger. Der Nachrichten-Client nach dem Empfangen des öffentlichen Schlüssels die Nachricht verschlüsseln und an den Nachrichten-Server übermittelt.

## Beschreibung

Die Erfindung betrifft eine Vorrichtung und ein Verfahren zur Verschlüsselung oder Signatur von E-Mails, wobei ein Schlüsselpaar verwendet wird, das einen geheimen und öffentlichen Schlüssel umfasst.

### Problemstellung

Die verschlüsselte Übertragung bzw. Signatur von E-Mails wird in der Praxis kaum eingesetzt, da sie zu aufwendig und nicht benutzerfreundlich ist. So muss der Empfänger einer verschlüsselten E-Mail ein Schlüsselpaar besitzen, das er häufig sogar selbst erzeugen muss. Der öffentlichen Schlüssel des Schlüsselpaares ist zu zertifizieren, damit der Sender sicher sein kann, dass es tatsächlich der öffentliche Schlüssel des Empfängers ist. Außerdem muss der Empfänger dem Sender seinen öffentlichen Schlüssel bekannt machen, entweder durch ein öffentliches Verzeichnis oder er muss ihm den Schlüssel übermitteln. Das Verfahren zum Signieren bzw. Verifizieren ist ebenfalls aufwendig.

### Stand der Technik

Der aufgeführte Stand der Technik beschreibt Public-Key-Verfahren siehe z.B. Schneier, Bruce: Applied Cryptography, John Wiley & Sons, Inc. Zur derzeitigen E-Mail-Verschlüsselung bzw. Signatur z.B. bei T-Online siehe http://dienste.t-onlinebusiness.de/busi/dien/sich/mail/star/CP/ar-startseite-1.html

### Aufgabe der Erfindung:

Aufgabe der vorliegenden Erfindung ist es, ein Verfahren bereitzustellen, das eine einfache Verschlüsselung bzw. Signatur unter Verwendung gegebener Techniken ermöglicht und durch geringe Anpassung von gegebenen Systemen.

### Lösung der Aufgabe:

Gelöst wird die Aufgabe durch eine Erfindung mit den Merkmalen der unabhängigen Ansprüche, bei der das Schlüsselmanagement vom Service Provider, der den Mail-Server bereitstellt, durchgeführt wird und weder Sender noch Empfänger zusätzlichen Aufwand haben (im Folgenden ist Service-Provider mit Mail-Server oder mehreren Mail-Servern bzw. Systemen gleichzustellen). Diese Lösung erfordert ein erhöhtes Vertrauen in den Service Provider und ist unter Umständen als weniger sicher anzusehen als die verfügbaren Lösungen. Da diese aber wegen Ihres Aufwands häufig dazu führen, dass eine Verschlüsselung vermieden wird, ist die vorliegende Lösung ein praktikabler Weg für ein gewisses Maß an Sicherheit.

Die folgenden Figuren zeigen Ausführungsbeispiele der vorliegenden Erfindung. Im Einzelnen zeigt:
- Figur 1: einen Ablaufplan der Kommunikation eines E-Mail-Client mit E-Mail-Server zur E-Mail-Verschlüsselung,
- Figur 2: einen Ablaufplan der Kommunikation eines E-Mail-Client mit E-Mail-Server zur E-Mail-Signatur.

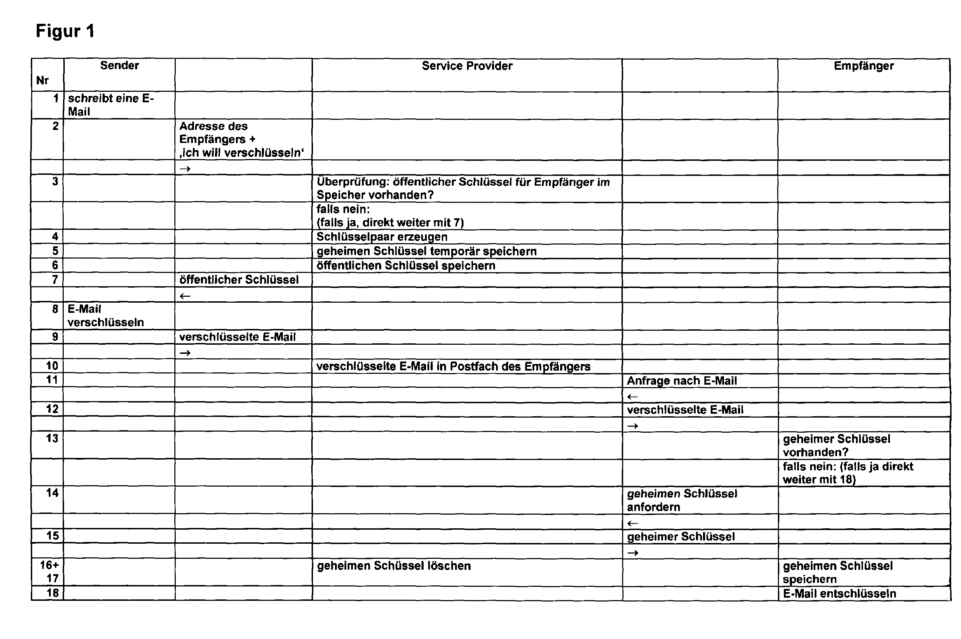

Die Figur 1 beschreibt zunächst eine Lösung für das Versenden einer verschlüsselten E-Mail:

Das grundsätzliche Problem der Beteiligten ist, dass der Sender eine verschlüsselte Mail an den Empfänger schicken will, und der Empfänger, der die verschlüsselte Mail vom Sender erhält, diese entschlüsseln muss.

Beide benötigen einen Service Provider, der mit einem entsprechenden Mail-Server eine Hilfestellung gibt. In Figur 1 wird zunächst die Lösung beschrieben, dass beide den gleichen Service Provider haben. In einer weiteren Variante wird die Möglichkeit verschiedener Service Provider angesprochen.

Grundsätzlich werden folgende Komponenten eingesetzt. Der Sender benötigt einen E-Mail-Client mit einer Option ,verschlüsselt versenden', durch den eine Anfrage an eine Verschlüsselungseinheit übertragen werden kann. Soweit kein öffentlicher Schlüssel lokal vorhanden ist, wird ein Schlüsselpaar vom Server angefordert. Weiterhin bedarf es einer Empfangseinheit für öffentliche Schlüssel und eines Speichers für den öffentlichen Schlüssel sowie einer Verschlüsselungseinheit.

Der Empfänger benötigt einen E-Mail-Client mit einer Empfangseinheit und einem Speicherbereich für geheime Schlüssel. Eine Entschlüsselungseinheit zum Entschlüsseln der Informationen ist weiterhin einzusetzen.

Der Service Provider benötigt einen angepassten Mailserver, der die Option ,verschlüsselt versenden' versteht und eine Komponente zur Schlüsselerzeugung bereitstellt und einen Speicher für die öffentlichen Schlüssel der Empfänger. In einem temporären Speicher können die geheimen Schlüssel des Empfängers zwischengespeichert werden, wobei darauf geachtet wird, dass kein unerlaubter Zugriff stattfindet.

In einer weiter unten beschriebenen Variante werden die folgenden Aufgaben von zwei Service-Providern bzw. Mail-Servern(vom Sender und vom Empfänger) übernommen.

Im Folgenden wird der Ablauf in Figur 1 beschrieben.

Der Sender schreibt eine E-Mail, trägt die Adresse des Empfängers ein und klickt auf ,verschlüsselt versenden'. Der E-Mail-Client des Senders teilt dem Service Provider bzw. E-Mail-Server mit, dass er an den Empfänger eine verschlüsselte Mail verschicken will. Der E-Mail-Server überprüft, ob für diesen Empfänger bereits ein öffentlicher Schlüssel in seinem Speicher vorliegt.

Ist das nicht der Fall, erzeugt er ein Schlüsselpaar aus öffentlichem und geheimem Schlüssel. Den öffentlichen Schlüssel legt er in seinem Speicher ab und sendet ihn an den E-Mail-Client. Den geheimen Schlüssel speichert er temporär.

Liegt schon ein öffentlicher Schlüssel vor, sendet er ihn an den E-Mail-Client des Senders.

Der E-Mail-Client des Senders verschlüsselt mit dem öffentlichen Schlüssel die E-Mail und sendet sie wie üblich (z.B. mit SMTP) an den E-Mail-Server, der sie in dem Postfach auf dem E-Mail-Server des Empfängers ablegt.

Es ist vorteilhaft, wenn für den Sender die Übertragung des öffentlichen Schlüssels nicht sichtbar wird, sondern Anfragen nach dem Schlüssel, Übertragung des Schlüssels, Verschlüsselung der Mail und Übertragung der verschlüsselten Mail für ihn wie ein Arbeitsschritt aussieht.

Der Empfänger fragt mit seinem E-Mail-Client wie üblich sein Postfach ab (z.B. mit POP3 oder IMAP). Die Mails werden wie üblich an ihn übertragen.

Erhält der Empfänger zum ersten Mal eine verschlüsselte Mail, liegt der geheime Schlüssel noch im temporären Speicher beim Service Provider. Dieser wird vom Service Provider an den E-Mail-Client des Empfängers übertragen, entweder auf Anforderung des E-Mail-Clients oder automatisch vom Service Provider. Diese Übertragung sollte vorteilhafter Weise verschlüsselt sein, da keiner den geheimen Schlüssel abhören soll. Der E-Mail-Server ist für diese Dienstleistungen sehr speziell ausgerichtet und weist unangreifbare Speicherbereiche für die Speicherung der geheimen Schlüssel auf.

Nach der Übertragung wird der geheime Schlüssel im temporären Speicher des Service Providers gelöscht.

Der E-Mail-Client des Empfängers speichert den geheimen Schlüssel, sodass er die nächsten verschlüsselten Mails ohne vorherige Schlüsselübertragung entschlüsseln kann.

Auch diese Prozedur kann transparent für den Empfänger erfolgen, der am Ende nur die entschlüsselte Mail sieht.

In einer möglichen Variante hat der E-Mail-Client des Senders einen Speicher für öffentliche Schlüssel. Nachdem er das erste Mal eine verschlüsselte Mail an einen bestimmten Empfänger gesendet und dazu dessen öffentlichen Schlüssel erhalten hat, speichert er diesen bei sich. Wenn der Sender das nächste Mal eine verschlüsselte E-Mail an den gleichen Empfänger senden will, überprüft der E-Mail-Client zunächst seinen lokalen Speicher. Ist dort der öffentliche Schlüssel bereits vorhanden, kann er die E-Mail gleich verschlüsseln und muss den öffentlichen Schlüssel nicht erneut anfordern.

Nachteil dieser Variante ist, dass die Aktualität bzw. Gültigkeit des öffentlichen Schlüssels nicht sicher gestellt ist. Dieses Problem kann man mit einer beschränkten Gültigkeitsdauer zumindest entschärfen oder es wird eine Datumsabfrage hinsichtlich der Aktualität des Schlüssels vorgenommen.

Der Sender braucht zum Verschlüsseln kein eigenes Schlüsselpaar. Trotzdem kann es sinnvoll sein, dass auch er ein Schlüsselpaar besitzt und dass sein öffentlicher Schlüssel dem Empfänger bekannt gemacht wird.

Das ist zum einen der Fall, wenn der Empfänger verschlüsselt auf die E-Mail des Senders antworten will.

Zum anderen kann der Sender seine E-Mail auch signieren wollen, sodass er seinen geheimen Schlüssel benötigt.

Zur Lösung des Problems wird folgende Variante vorgeschlagen. Wenn der Sender eine verschlüsselte E-Mail an den Empfänger schicken will, überprüft der Service Provider nicht nur, ob der Empfänger einen öffentlichen Schlüssel hat, sondern auch ob der Sender einen öffentlichen Schlüssel hat. Ist das nicht der Fall, erzeugt er auch für den Sender ein Schlüsselpaar. Den geheimen Schlüssel des Senders kann er z.B. im Klartext zusammen mit dem öffentlichen Schlüssel des Empfängers an den E-Mail-Client des Senders schicken. Vorteilhaft ist, dass auch diese Übertragung verschlüsselt ist. Den öffentlichen Schlüssel des Senders speichert der Mail-Server. Dann ist er bereits vorhanden, wenn der Empfänger (jetzt in der Rolle als Sender) ihn zur Beantwortung der E-Mail anfordert. Ist bei den E-Mail-Clients des Empfängers auch ein Speicher für öffentliche Schlüssel vorgesehen, dann kann der E-Mail-Server den öffentlichen Schlüssel des Senders auch bei der Übertragung der E-Mail oder des geheimen Schlüssels des Empfängers mit an den Empfänger übertragen. Es sei darauf hingewiesen, dass der E-Mail-Server auch andere Komponenten bzw. Server in Anspruch nehmen kann, um das gewünschte Ziel zu erreichen. Ein monolithischer Aufbau ist somit nicht notwendig es kann sie auch um ein dezentrales System handeln.

In den bisherigen Ausführungsbeispielen besitzen Sender und Empfänger den gleichen E-Mail-Server. Es ist auch eine Variante denkbar, bei der beide verschiedene E-Mail-Server umfassen. In diesem Fall gibt es mehrere Möglichkeiten, wie die Aufgaben der Schlüsselerzeugung und Schlüsselspeicherung aufgeteilt werden können. Im Folgenden wird eine vorteilhafte Ausführungsform beschrieben. In den Ansprüchen wird die Verwendung von mehreren Server durch den Begriff ,mittelbar' ausgedrückt.

Der E-Mail-Server des Senders (SPS) fragt beim E-Mail-Server des Empfängers (SPE) nach dessen öffentlichem Schlüssel. Ist er vorhanden, sendet SPE ihn an SPS. SPS sendet ihn weiter an den Sender und kann ihn ggf. auch in seinem eigenen Speicher ablegen. Ist er nicht vorhanden, wird er zuvor von SPE generiert, der den geheimen Schlüssel in seinem temporären Speicher ablegt. Der Sender verschlüsselt die E-Mail, sendet sie an SPS, dieser sendet sie weiter an SPE. Wenn der Empfänger die E-Mail abholt, bekommt er - falls nötig - den geheimen Schlüssel aus dem temporären Speicher des SPE geschickt.

Der geheime Schlüssel ist vom Service Provider bzw. E-Mail-Server zum Empfänger zu übertragen. Dazu gibt es verschiedene Möglichkeiten.

In obiger Beschreibung überprüft der Empfänger zunächst, ob er bereits einen geheimen Schlüssel hat. Ist das nicht der Fall, fordert er ihn beim Service Provider bzw. E-Mail-Server an. Dies kann auch automatisch geschehen. Wenn der Service Provider merkt, dass er einen geheimen Schlüssel des Empfängers im temporären Speicher hat, sendet er ihn automatisch an ihn.

Die Verschlüsselung des geheimen Schlüssels kann z.B. über die üblichen Protokolle wie SSL erfolgen oder durch eine vorherige Schlüsselvereinbarung zwischen Service Provider und E-Mail-Client. Diese Lösung ist insbesondere dann möglich, wenn die Software des E-Mail-Clients dem Empfänger vom Service Provider zur Verfügung gestellt wird, denn dann kann der Service Provider vorab einen Schlüssel in den E-Mail-Client einbauen, den er verwenden kann.

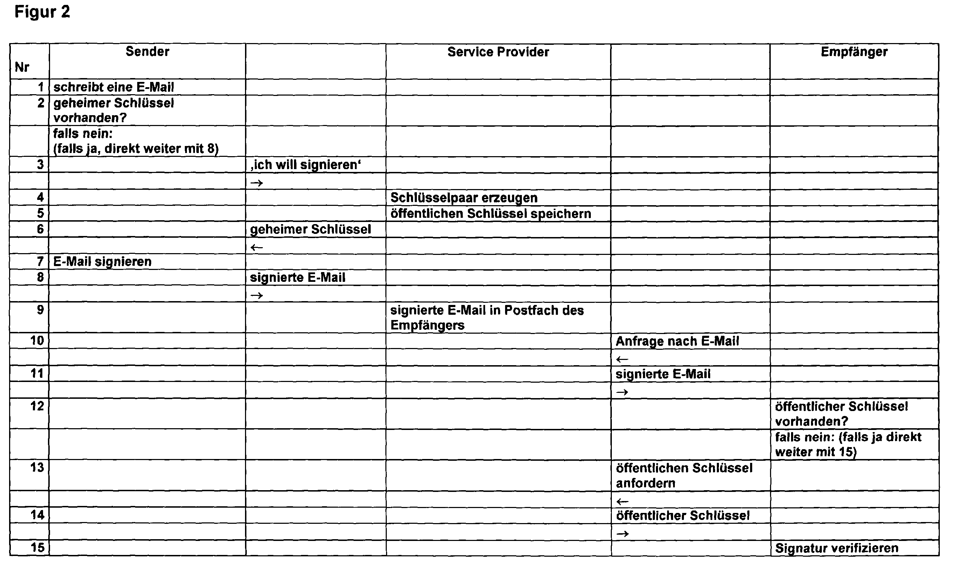

In der oben beschriebenen Lösung wurde zunächst nur die Verund Entschlüsselung von E-Mails beschrieben. Ein weiteres Einsatzgebiet ist die Authentisierung mit einer Signatur, wie sie in Figur 2 dargestellt wird. In diesem Fall benötigt der Sender seinen geheimen Schlüssel zur Signatur und der Empfänger den öffentlichen Schlüssel des Senders zur Verifizierung der Signatur.

Für die Signatur gelten die gleichen Varianten wie für die Verschlüsselung wie sie aus der Figur 2 zu entnehmen ist.

Es wird darauf hingewiesen, dass eine E-Mail auch gleichzeitig verschlüsselt und signiert werden kann.

Es wird darauf hingewiesen, dass unter Empfänger vorzugsweise die E-Mail-Adresse zu verstehen ist.

### Liste der zitierten Literatur:

Schneier, Bruce: Applied Cryptography, John Wiley & Sons, Inc. E-Mail-Verschlüsselung bzw. Signatur z.B. bei T-Online siehe http://dienste.t-onlinebusiness.de/busi/dien/sich/mail/star/CP/ar-startseite-1.html

## Patentansprüche

1. Ein Verfahren zur Ver- und/oder Entschlüsselung von elektronischen Nachrichten, mit mindestens zwei Nachrichten-Clients zum Senden und/oder Empfangen der elektronischen Nachrichten und einem Nachrichten-Server, der die elektronischen Nachrichten des sendenden Nachrichten-Clients empfängt und dem empfangenden Nachrichten-Client bereitstellt und/oder an den Empfänger weiterleitet, wobei
- der sendende Nachrichten-Client vor dem verschlüsselten Senden der elektronischen Nachricht vom Nachrichten-Server einen öffentlichen Schlüssel des Empfängers anfordert,
- der Nachrichten-Server überprüft, ob der Empfänger einen öffentlichen Schlüssel besitzt, um diesen dem sendenden Nachrichten-Client bereitzustellen, und falls ein solcher nicht existiert die Erzeugung eines Schlüsselpaares für den Empfänger einleitet, wobei der öffentliche Schlüssel dem Nachrichten-Client des Senders übermittelt wird und der geheime Schlüssel dem Empfänger bereitgestellt wird,
- der Nachrichten-Client nach dem Empfangen des öffentlichen Schlüssels die Nachricht verschlüsselt, um diese dann an den Nachrichten-Server zu übermitteln.

2. Ein Verfahren zur Signatur und/oder Überprüfung der Signatur von elektronischen Nachrichten, mit mindestens zwei Nachrichten-Clients zum Senden und/oder Empfangen der elektronischen Nachrichten und mindestens einem Nachrichten-Server, der die elektronischen Nachrichten des sendenden Nachrichten-Clients empfängt und dem empfangenden Nachrichten-Client bereitstellt und/oder an den Empfänger weiterleitet, wobei
- der Nachrichten-Client vor dem Signieren überprüft, ob ein geheimer Schlüssel des Senders vorliegt und ansonsten vom Nachrichten-Server ein geheimen Schlüssel anfordert,
- der Nachrichten-Server überprüft, ob der Sender einen Schlüssel besitzt, um diesen dem sendenden Nachrichten-Client bereitzustellen, und falls ein solcher nicht existiert, die Erzeugung eines Schlüsselpaares für den Sender einleitet, wobei der öffentliche Schlüssel dem Empfänger bereitgestellt wird und der geheime Schlüssel dem Sender bereitgestellt wird,
- der sendende Nachrichten-Client mit dem geheimen Schlüssels die Nachricht signiert, um diese dann an den Nachrichten-Server zu übermitteln,
- der Nachrichten-Client des Empfängers, den öffentlichen Schlüssel des Senders herunterlädt, soweit er nicht bereits lokal vorliegt, um die Signatur der elektronische Nachricht zu überprüfen.

3. Das Verfahren nach einem oder mehreren der vorhergehenden Ansprüche, **dadurch gekennzeichnet, dass** mehrere Nachrichten-Server bei der Bestimmung, also dem lokale laden oder globalen Herunterladen, eines öffentlichen Schlüssels miteinander kommunizieren, wobei vorzugsweise der Nachrichten-Server des Empfängers bei Fehlen eines Schlüsselpaares für die Verschlüsselung dieses erzeugt und der Nachrichten-Server des Senders bei Erstellung der Signatur dieses erzeugt.

4. Das Verfahren nach einem oder mehreren der vorhergehenden Ansprüche, **dadurch gekennzeichnet, dass** der erzeugte geheime Schlüssel zur Verschlüsselung verschlüsselt an den Empfänger weitergeleitet wird oder bei der Signatur verschlüsselt an den Sender.

5. Das Verfahren nach einem oder mehreren der vorhergehenden Ansprüche, **dadurch gekennzeichnet, dass** das Schlüsselpaar lediglich einmalig oder für eine begrenzte Anzahl oder Zeitdauer verwendet wird und danach sowohl der öffentliche als auch der geheime Schlüssel gelöscht wird.

6. Das Verfahren nach einem oder mehreren der vorhergehenden Ansprüche, **dadurch gekennzeichnet, dass** auf dem Nachrichten-Server, der den geheimen Schlüssel erzeugt hat, dieser gelöscht wird.

7. Das Verfahren nach einem oder mehreren der vorhergehenden Ansprüche, **dadurch gekennzeichnet, dass** der Nachrichten-Server die öffentlichen und/oder die geheimen Schlüssel zwischenspeichert.

8. Das Verfahren nach einem oder mehreren der vorhergehenden Ansprüche, **dadurch gekennzeichnet, dass** der Nachrichten-Client die öffentlichen und/oder seinen geheimen Schlüssel speichert.

9. Das Verfahren nach einem oder mehreren der vorhergehenden Ansprüche, **dadurch gekennzeichnet, dass** auch für den Sender oder bei der Signatur für den Empfänger einer Nachricht ein Schlüsselpaar erzeugt wird, das oder zumindest der geheime Schlüssel an diesen übermittelt wird, falls dieser kein Schlüsselpaar besitzt, ferner kann beim Verschlüsseln der öffentliche Schlüssel des Senders an den Empfänger und/oder bei der Signatur der öffentliche Schlüssel des Empfängers an den Sender geschickt werden.

10. Software für einen Computer, **dadurch gekennzeichnet, dass** ein Verfahren nach einem oder mehreren der vorhergehenden Verfahrensansprüche implementier ist.

11. Datenträger für einen Computer **gekennzeichnet, durch** die Speicherung einer Software nach dem vorhergehenden Softwareanspruch.

12. Computersystem **gekennzeichnet durch** eine Einrichtung, die den Ablauf eines Verfahrens nach einem oder mehreren der vorhergehenden Verfahrensansprüche erlaubt.

13. Computersystem **gekennzeichnet durch** eine Einrichtung, die einen E-Mail-Server implementiert, der **durch** unmittelbare und/oder mittelbare Aufforderung von einem E-Mail-Client ein Schlüsselpaar für die Signatur und/oder für die Verschlüsselung erstellt, wobei der öffentliche Schlüssel an den E-Mail-Client des Senders oder bei der Signatur an den Empfänger übertragen wird und der geheime Schlüssel verschlüsselt an den Empfänger oder bei der Signatur an den Sender.

14. Computersystem nach dem vorhergehenden Anspruch, dadruch gekennzeichnet, dass Mittel vorhanden sind, die eine Implementierung nach einem oder mehreren der vorhergehenden Verfahrensansprüchen sind.
